# EUROPEAN PATENT APPLICATION

(11) **EP 4 814 168 A1**
(43) Date of publication of application: **30.09.2026**
(21) Application number: 24926984.6
(22) Date of filing: 05.12.2024
(51) Int. Cl.: C25B 15/02, C25B 1/04, C25B 9/00, C25B 9/65, C25B 15/023

(54) **ELECTROLYSIS DEVICE, METHOD FOR CONTROLLING ELECTROLYSIS DEVICE, AND CONTROL PROGRAM FOR ELECTROLYSIS DEVICE**

(30) Priority: 29.02.2024 JP 2024029944
(71) Applicant: Mitsubishi Heavy Industries, Ltd., Chiyoda-ku, Tokyo 1008332 (JP)
(72) Inventor: HARA, Keijo, Tokyo 100-8332 (JP)
(74) Representative: Studio Torta S.p.A.
(86) International application number: PCT/JP2024/042984
(87) International publication number: WO 2025/182218

(57) **Abstract**

Provided are an electrolysis device, an electrolysis device control method, and an electrolysis device control program that reduce circulation current flowing through a grounding wire. An electrolysis device (1) includes: a plurality of rectifiers (20); and an electrolyzer (100) having a plurality of cell stacks (10) having common positive electrodes, the positive electrode of each of the cell stacks (10) is connected to the positive electrode of each of the plurality of rectifiers (20) installed in parallel, the negative electrode of each of the cell stacks (10) is connected to the negative electrode of each of the rectifiers (20), and electrolysis device further includes a balance cable (80) connecting a negative electrode of at least one of the cell stacks (10) and a negative electrode of at least another one of the cell stacks (10) to each other.

## Description

### [Technical Field]

The present disclosure relates to an electrolysis device, an electrolysis device control method, and an electrolysis device control program.

### [Background Art]

In recent years, to achieve carbon neutrality, the movement toward energy transition is gaining momentum. One measure for the energy transition may be to utilize hydrogen gas turbines. For the use of hydrogen gas turbines, hydrogen production technologies and storage technologies have been studied.

Patent Literature 1 discloses a technology to suppress an increase in the lowest potential difference due to electrical connection between negative side conductive members in a Solid Oxide Electrolyser Cell (SOEC) that utilizes an electrolysis reaction of water to generate hydrogen.

Patent Literature 2 discloses a technology to ground a roll in contact with a metal band outside an electrolyzer and control rectifiers so as to reduce current between the grounded roll and a grounding part in a metal band electrolyzing treatment line.

### [Citation List]

### [Patent Literature]

[PTL 1]
   Japanese Patent Application Laid-Open No. 2019-57407
[PTL 2]
   Japanese Patent Application Laid-Open No. 2001-26900

### [Summary of Invention]

### [Technical Problem]

In the art of Patent Literature 1, however, a plurality of cell stacks are connected in series, and there is no consideration on the configuration in which a plurality of cell stacks are connected in parallel. In the art of Patent Literature 1, the intermediate point is grounded, and there also is no consideration on circulation current flowing through a grounding wire. In the art of Patent Literature 2, while electrolytic current is adjusted to reduce the grounding current, there is no consideration on occurrence of circulation current flowing through a grounding wire.

The present disclosure has been made in view of such circumstances and intends to provide an electrolysis device, an electrolysis device control method, and an electrolysis device control program that reduce circulation current flowing through a grounding wire.

### [Solution to Problem]

To achieve the above object, an electrolysis device, an electrolysis device control method, and an electrolysis device control program of the present disclosure employ the following solutions.

The electrolysis device of the present disclosure is an electrolysis device including: a plurality of rectifiers; and an electrolyzer having a plurality of cell stacks having common positive electrodes, a positive electrode of each of the cell stacks is connected to a positive electrode of each of the plurality of rectifiers installed in parallel, a negative electrode of each of the cell stacks is connected to a negative electrode of each of the rectifiers, and the electrolysis device further includes a balance cable connecting a negative electrode of at least one of the cell stacks and a negative electrode of at least another one of the cell stacks to each other.

The electrolysis device control method of the present disclosure is a control method performed by a computer of an electrolysis device, the electrolysis device includes a plurality of rectifiers and a plurality of cell stacks having common positive electrodes, a positive electrode of each of the cell stacks is connected to a positive electrode of each of the plurality of rectifiers installed in parallel, and a negative electrode of each of the cell stacks is connected to a negative electrode of each of the rectifiers, the electrolysis device further includes a balance cable connecting a negative electrode of at least one of the cell stacks and a negative electrode of at least another one of the cell stacks to each other and a current sensor configured to measure current of the balance cable, and the control method includes: controlling a value of output current of each of the rectifiers based on a value of current measured by the current sensor.

The electrolysis device control program of the present disclosure causes a computer to perform the control method described above.

### [Advantageous Effects of Invention]

According to the present disclosure, circulation current flowing through the grounding is reduced. Further, signal noise due to the circulation current can be reduced. Furthermore, costs can be reduced without use of a bus duct that involves an expensive material.

### [Brief Description of Drawings]

[Fig. 1]

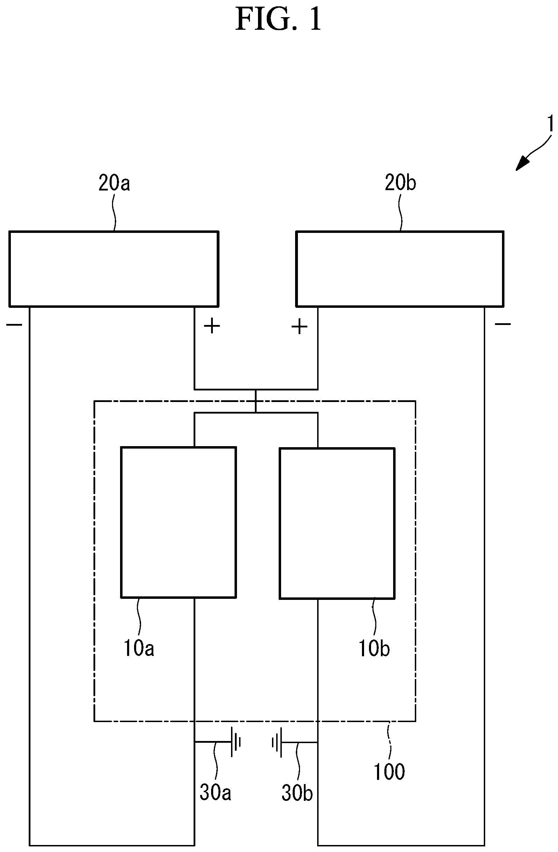

   Fig. 1 is a diagram illustrating a conventional electrolysis device.
[Fig. 2]

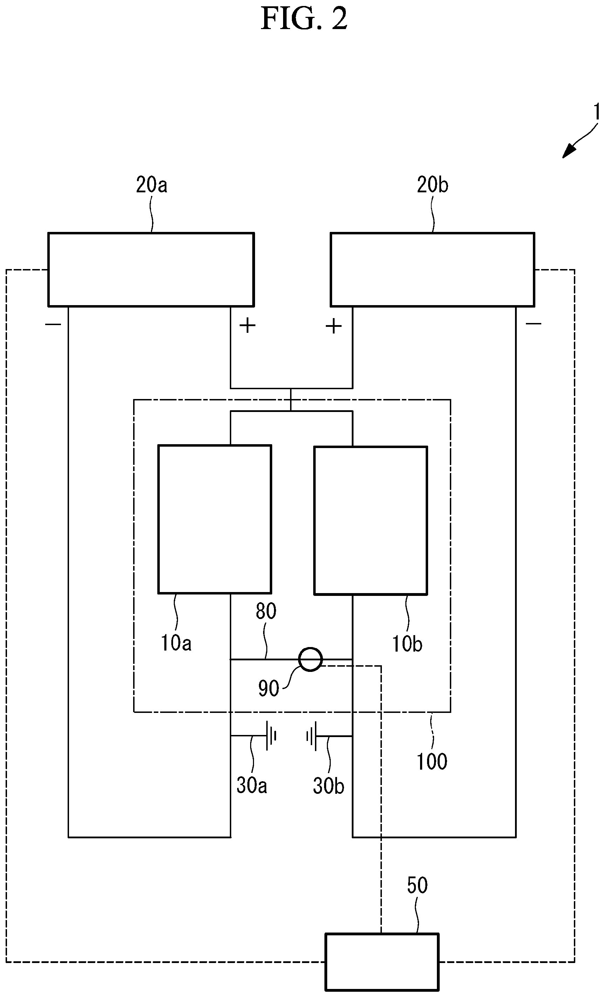

   Fig. 2 is a diagram illustrating an electrolysis device according to some embodiments of the present disclosure.
[Fig. 3]

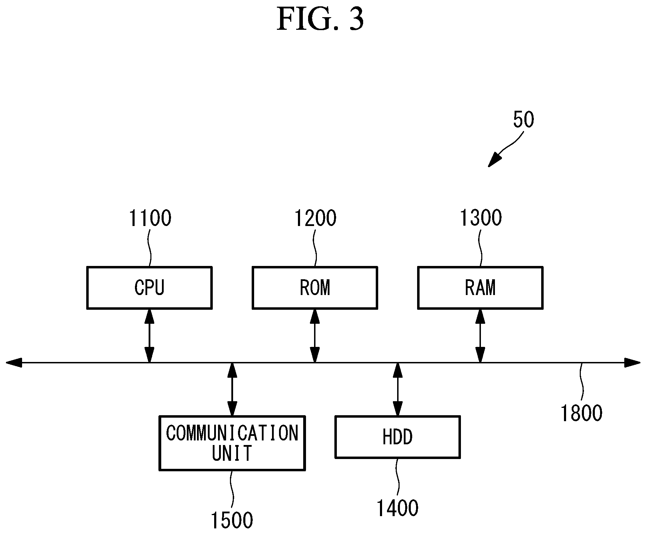

   Fig. 3 is a diagram illustrating an example of a hardware configuration of a controller according to some embodiments of the present disclosure.
[Fig. 4]

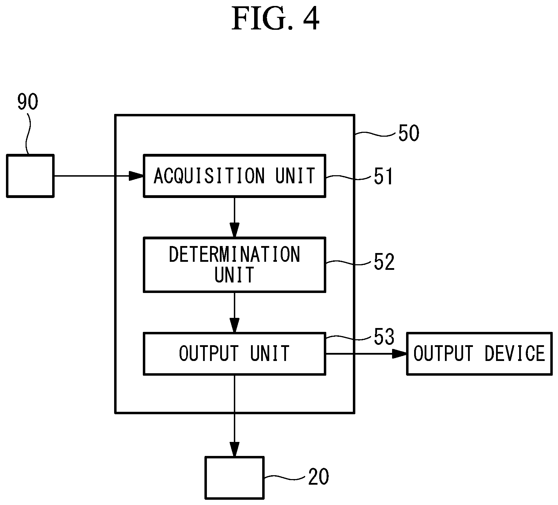

   Fig. 4 is a diagram illustrating an example of functions of the controller according to some embodiments of the present disclosure.
[Fig. 5]

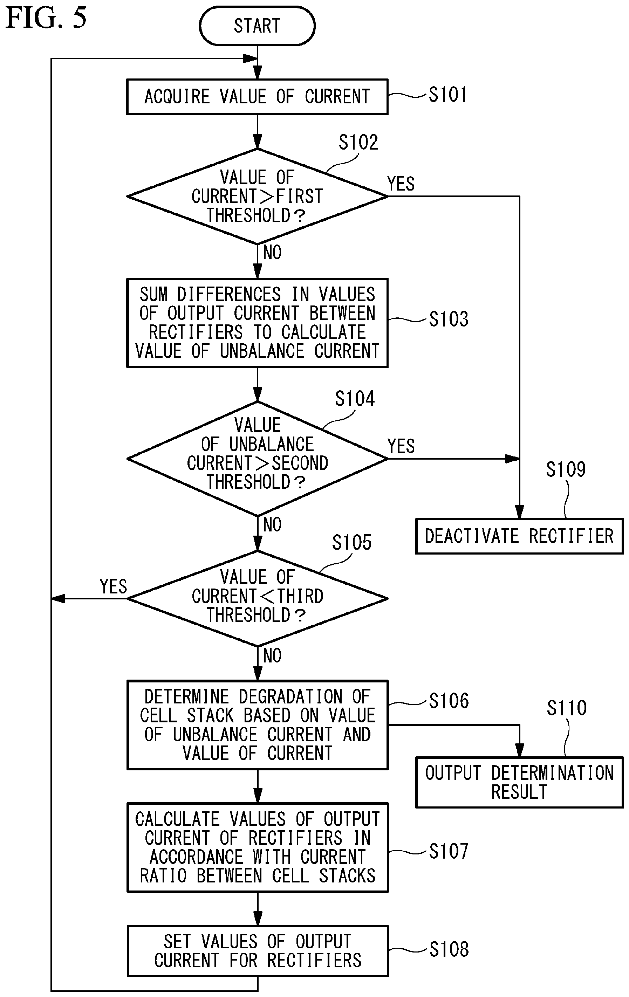

   Fig. 5 is a diagram illustrating a control flow of the controller according to some embodiments of the present disclosure.

### [Description of Embodiments]

One embodiment of an electrolysis device, an electrolysis device control method, and an electrolysis device control program according to the present disclosure will be described below with reference to the drawings.

Fig. 1 is a diagram illustrating a conventional electrolysis device.

As illustrated in Fig. 1, an electrolysis device 1 includes an electrolyzer 100 and rectifiers 20a and 20b. The multiple rectifiers 20a and 20b are installed in parallel. The electrolyzer 100 includes cell stacks 10a and 10b. The electrolysis device 1 of the present disclosure is assumed to be a water electrolysis device, for example.

The multiple cell stacks 10a and 10b of the electrolyzer 100 form an assembly of a plurality of electrolytic cells (not illustrated). For example, each cell stack 10 is formed such that a plurality of electrolytic cells are aligned in one direction. The cell stacks 10 have common positive electrodes (anodes, plus (+) electrodes). In the present embodiment, it is intended that the positive electrodes of the cell stacks 10 are made common in the middle of the electrolyzer 100, and the negative electrodes (cathodes, minus (-) electrodes) of the cell stacks 10 are provided to both ends of the electrolyzer 100. The electrolyzer 100 performs alkaline water electrolysis, for example, and when a DC voltage is applied thereto from the rectifiers 20, electrolyzes water contained in electrolyzed water to generate hydrogen.

The negative electrode of the cell stack 10a is connected to the negative electrode of the rectifier 20a, and the negative electrode of the cell stack 10b is connected to the negative electrode of the rectifier 20b. Each rectifier 20 has a plurality of converter circuits (units) therein.

A grounding wire 30a is provided on the negative electrode side of the cell stack 10a. A grounding wire 30b is provided on the negative electrode side of the cell stack 10b.

In the following description, when respective cell stacks 10, respective rectifiers 20, and respective grounding wires 30 are distinguished from each other in the same terms, either "a" or "b" is appended thereto, and when respective cell stacks 10, respective rectifiers 20, and respective grounding wires 30 are not distinguished from each other in the same terms, "a" or "b" is omitted.

When AC power is externally input to the rectifiers 20, the AC power is converted into DC power by the rectifiers 20, and a DC voltage is applied to the positive electrodes of the cell stacks 10 of the electrolyzer 100 from the positive electrode of the rectifiers 20. The applied DC power is used for electrolysis of water in the electrolyzer 100.

Current flows from the negative electrodes of the cell stacks 10 to the negative electrodes of the rectifiers 20. The negative electrodes of the cell stacks 10 are connected to the grounding wires 30, respectively. Since the electrolyzer 100 is a heavy object and experiences expansion and contraction, it is difficult to have complete insulation. Thus, the grounding wires 30 are essential configurations.

There is a difference in performance between the cell stacks 10, and when the cell stack 10a has better performance than the cell stack 10b, for example, larger current flows in the cell stack 10a than in the cell stack 10b. For example, the difference in performance is caused in accordance with a degree of degradation, an initial performance error, or the like. When larger current flows in the cell stack 10a than in the cell stack 10b, a potential difference occurs between the grounding wire 30a and the grounding wire 30b, and circulation current flows from the grounding wire 30a to the grounding wire 30b.

Furthermore, circulation current may flow through various paths through which current flows, such as piping connected to the electrolyzer 100 or a building in which the electrolysis device 1 is installed.

For example, if unintended circulation current flows to the ground and a human or the like touch the portion of the circulation current, this may cause an electric shock. A current flow to the ground may cause fluctuations of the potential of a grounding grid. While instrumentation cables used in the electrolysis device 1 are grounded, a fluctuation of the potential of the ground grid may propagate as noise to signals on the instrumentation cables. Propagation of noise to control signals will reduce the reliability of the overall system.

As one method to solve this problem, it is conceivable to combine a current circuit at the end of the rectifier 20. However, if a current circuit is combined at the end of the rectifier 20, a required allowable current will be twice the case of no current circuit being combined. In such a case, a bus duct that can accommodate the increased current is required, and this will increase costs.

In the present embodiment, a balance cable 80 that is less costly than a bus duct is used to connect the negative electrode of the cell stack 10a and the negative electrode of the cell stack 10b to each other.

Fig. 2 is a diagram illustrating an electrolysis device according to some embodiments of the present disclosure.

In Fig. 2, description of features common to Fig. 1 will be omitted.

As illustrated in Fig. 2, the electrolysis device 1 includes the electrolyzer 100, the rectifiers 20a and 20b, and a controller 50. The multiple rectifiers 20a and 20b are installed in parallel. The electrolyzer 100 includes the cell stacks 10a and 10b.

The negative electrode (-) of the cell stack 10a is connected to the negative electrode of the rectifier 20a, and the negative electrode of the cell stack 10b is connected to the negative electrode of the rectifier 20b.

The grounding wire 30a is provided on the negative electrode side of the cell stack 10a. The grounding wire 30b is provided on the negative electrode side of the cell stack 10b.

The negative electrode of the cell stack 10a and the negative electrode of the cell stack 10b are connected to each other by the balance cable 80. An ammeter 90 may be provided on the balance cable 80.

For example, when the cell stack 10a has better performance than the cell stack 10b, larger current flows in the cell stack 10a than in the cell stack 10b. At this time, although a potential difference occurs between the negative electrode side of the cell stack 10a and the negative electrode side of the cell stack 10b, current flows through the balance cable 80.

For the balance cable 80, a cable having a lower resistance than that between the grounding wire 30a and the grounding wire 30b is selected. Thus, the current flows through the balance cable 80 rather than between the grounding wires 30. Accordingly, a potential difference is less likely to occur between the grounding wire 30a and the grounding wire 30b, and the circulation current flowing from the grounding wire 30a to the grounding wire 30b can be reduced.

For example, in the present embodiment, for the balance cable 80, two jumper cables of 325 square (sq) are used. In such a case, when the electrolysis device 1 is in the 100% operation state, current of about 100 to 300 A flows through the balance cable 80.

The controller 50 is connected to the rectifiers 20 and the ammeter 90 and controls the electrolysis device 1.

Fig. 3 is a diagram illustrating an example of a hardware configuration of a controller according to some embodiments of the present disclosure.

As illustrated in Fig. 3, the controller 50 is a computer system (calculator system) and includes, for example, a central processing unit (CPU: processor) 1100, a secondary storage device (ROM, secondary storage: memory) 1200, a main storage device (RAM, main memory) 1300, a hard disk drive (HDD) 1400 as a mass storage device, and a communication unit 1500 for connection to a network or the like. As the mass storage device, a solid state drive (SSD) may be used. These components are connected to each other via a bus 1800.

The CPU 1100 controls the entire controller 50 by using operating system (OS) stored in the secondary storage device 1200 connected via the bus 1800, for example, and executes various programs stored in the secondary storage device 1200 to perform various processes. One or a plurality of CPUs 1100 are provided and may implement a process in cooperation with each other.

The main storage device 1300 is formed of a writable memory such as a cache memory, a random access memory (RAM), or the like, for example, and is used as a working area where loading of an execution program for the CPU 1100, writing of processing data by the execution program, or the like are performed.

The secondary storage device 1200 is a non-transitory computer readable storage medium. The secondary storage device 1200 may be, for example, a magnetic disk, a magneto-optical disk, a CD-ROM, a DVD-ROM, a semiconductor memory, or the like. An example of the secondary storage device 1200 may be a read only memory (ROM), a hard disk drive (HDD), a solid state drive (SSD), a flash memory, or the like. For example, the secondary storage device 1200 stores the OS used for controlling the entire information processing device, such as Windows (registered trademark), iOS (registered trademark), Android (registered trademark), or the like, basic input/output system (BIOS), various device driver for hardware operation of peripheral devices, various application software, and various data or files or the like. The secondary storage device 1200 stores programs used for implementing various processes and various data required for implementing various processes. A plurality of secondary storage devices 1200 may be provided, and the programs or data as described may be divided and stored in respective secondary storage devices 1200.

The controller 50 may include an input unit formed of a keyboard, a mouse, or the like, a display unit formed of a liquid crystal display device, or the like to display data, or the like. The controller 50 may include the display unit and have a notification unit such as a lamp, a speaker configured to output a sound, in particular, an alarm sound, or the like.

Fig. 4 is a diagram illustrating an example of functions of the controller according to some embodiments of the present disclosure.

As illustrated in Fig. 4, the controller 50 includes an acquisition unit 51, a determination unit 52, and an output unit 53.

A series of processes for implementing functions of the controller 50 are stored in the secondary storage device 1200 (see Fig. 2) or the like in a form of a program as an example, and various functions are implemented when the CPU (processor) 1100 (see Fig. 2) loads the program into the main storage device 1300 (see Fig. 2) and performs modification and calculation processes on information. For the program, a form of being installed in advance in the secondary storage device 1200, a form of being provided in a state of being stored in another non-transitory computer readable storage medium, a form of being delivered via a wired or wireless communication connection, or the like may be applied. An example of the non-transitory computer readable storage medium may be a magnetic disk, a magneto-optical disk, a CD-ROM, a DVD-ROM, a semiconductor memory, or the like.

The acquisition unit 51 illustrated in Fig. 4 acquires a value of current flowing through the balance cable 80 measured by the ammeter 90.

The determination unit 52 determines whether or not to set a value of output current of each rectifier 20 based on the value of current of the balance cable 80 acquired by the acquisition unit 51. Further, the determination unit 52 determines the degradation state of the cell stacks 10 of the electrolyzer 100 based on the value of current of the balance cable 80.

The output unit 53 outputs a value of output current or a deactivation signal to each rectifier 20 based on the determination from the determination unit 52. Further, the output unit 53 outputs the degradation state of the cell stacks 10 to an output device.

Fig. 5 is a diagram illustrating a control flow of the controller according to some embodiments of the present disclosure.

In step S101 of Fig. 5, the acquisition unit 51 of the controller 50 acquires a value of current flowing through the balance cable 80 from the ammeter 90. The direction in which current flows can also be determined from the acquired value of current of the balance cable 80. The acquisition unit 51 acquires a value of output current of each rectifier 20.

Next, in step S102, the determination unit 52 determines whether or not the value of current of the balance cable 80 is greater than a first threshold. If it is determined that the value of current of the balance cable 80 is greater than the first threshold (YES in S102), the process proceeds to step S109. If it is determined that the value of current of the balance cable 80 is less than or equal to the first threshold (NO in S102), the process proceeds to step S103. Herein, the first threshold is a value of current set for protection of the balance cable 80, and a value of allowable current of the balance cable 80 is set as the first threshold, for example.

If it is determined that the value of current of the balance cable 80 is greater than the first threshold, this means that more current flows through the balance cable 80 and the difference in current between the cell stack 10a and the cell stack 10b has increased, and accordingly, the output unit 53 outputs a deactivation signal to each rectifier 20 (S109).

For example, when a short circuit occurs in the cell stack 10a in the electrolyzer 100, the resistance component of the cell stack 10a significantly decreases, and the current flowing into the cell stack 10a abruptly increases. At this time, circulation current flows through the balance cable 80 from the cell stack 10a side to the cell stack 10b side. If this circulation current exceeds a predetermined threshold, each rectifier 20 is deactivated for protection of the electrolysis device 1.

For example, it is assumed that the values of current of the rectifiers 20a and 20b are 6400 A, respectively. When respective cell stacks 10 have the same resistance, the current ratio between the cell stack 10a and the cell stack 10b is 1:1. That is, the current of 6400 A flows in each cell stack.

When the cell stack 10a is short-circuited and the resistance thereof decreases to half, current more easily flows through the cell stack 10a, and the current ratio between the cell stack 10a and the cell stack 10b will be 2:1. That is, the value of current in the cell stack 10a is about 8533 A, and the value of current in the cell stack 10b is about 4267 A.

Thus, circulation current of about 2133 A flows through the balance cable 80 from the cell stack 10a side to the cell stack 10b side. If the first threshold is the value of allowable current of the balance cable 80 and, for example, the balance cable 80 is a CV cable of 325 sq with double wirings, the first threshold is 1450 A. Since the value of current of the balance cable 80 exceeds the first threshold, each rectifier 20 is deactivated for protection of the balance cable 80.

In contrast, if it is determined that the value of current of the balance cable 80 is less than or equal to the first threshold, the process proceeds to step S103, and the controller 50 calculates a value of unbalance current that is a sum of differences of values of output current, which are the differences between the values of output current of the rectifiers 20. For example, when the value of current of the rectifier 20a is 100 A and the value of current of the rectifier 20b is 80 A, the value of unbalance current will be 20A.

Next, in step S104, the determination unit 52 determines whether or not the value of unbalance current is greater than a second threshold. If it is determined that the value of unbalance current is greater than the second threshold (YES in S104), the process proceeds to step S109. If it is determined that the value of unbalance current is less than or equal to the second threshold (NO in S104), the process proceeds to step S105. Herein, for the second threshold, a value of 10 to 30% of rated current or even 15% of rated current is set, for example.

Next, the determination unit 52 determines whether or not the value of current of the balance cable 80 is less than or equal to a third threshold (step S105). If it is determined that the value of current of the balance cable 80 is less than or equal to the third threshold (YES in S105), the process returns to step S101. If it is determined that the value of current of the balance cable 80 is greater than the third threshold (NO in S105), the process proceeds to step S106. Herein, for the third threshold, a value at 0 or near 0 is set, for example.

If it is determined that the value of current of the balance cable 80 is greater than the third threshold, the determination unit 52 determines the degradation of the cell stacks 10 based on the value of current of the balance cable 80 and the value of unbalance current (S106).

For example, when the performance of the cell stack 10a becomes lower than that of the cell stack 10b due to degradation or the like, the resistance component of the cell stack 10a will increase, and the current flowing into the cell stack 10a will decrease. At this time, circulation current flows through the balance cable 80 from the cell stack 10b side to the cell stack 10a side. When such circulation current is occurring, it can be determined that degradation of the cell stacks 10 has occurred.

For example, it is assumed that the values of current of the rectifiers 20a and 20b are 6400 A, respectively. When respective cell stacks 10 have the same resistance, the current ratio between the cell stack 10a and the cell stack 10b is 1:1. That is, the current of 6400 A flows in each cell stack.

When the cell stack 10a degrades and the resistance thereof has increased by 10%, current is less likely to flow into the cell stack 10a, and the current ratio between the cell stack 10a and the cell stack 10b will be 100:110. That is, this means that the value of current of the cell stack 10a is about 6095 A, and the value of current of the cell stack 10b is about 6705 A.

Thus, circulation current of about 305 A flows through the balance cable 80 from the cell stack 10b side to the cell stack 10a side. By measuring the value of current of the balance cable 80 by the ammeter 90, it is possible to calculate the current ratio between respective cell stacks 10. It can be determined that degradation of the cell stack 10a is ongoing based on a current ratio between respective cell stacks 10 and expected values of current of respective cell stacks 10. Similarly, it can be determined that an unbalance has occurred in the current flowing between the cell stack 10a and the cell stack 10b, that is, degradation of the cell stacks 10 is ongoing based on the fact that a value of unbalance current has occurred, in particular, the value thereof is large.

The output unit 53 outputs a determination result of the degradation determination on the cell stacks 10 in step S106 (S110).

Next, in step S107, the controller 50 calculates the current ratio between respective cell stacks 10 from the value of current of the balance cable 80 measured by the ammeter 90, calculates values of current of respective cell stacks 10 from the current ratio, and calculates values of output current of respective rectifiers 20 in accordance with the values of current of respective cell stacks 10. In the case of the previous example, the value of output current of the rectifier 20a corresponding to the cell stack 10a is calculated to be 6095 A, and the value of output current of the rectifier 20b corresponding to the cell stack 10b is calculated to be 6705 A.

Next, in step S108, the controller 50 sets the value of output current calculated in step S107 to respective rectifiers 20. The values of output current of the rectifiers 20 are set in accordance with the state of the cell stacks 10, and thereby the circulation current flowing through the balance cable 80 can be reduced. Because of the reduced circulation current flowing through the balance cable 80, the capacity of the balance cable 80 can be reduced, and costs can be further reduced.

In a short circuit in the cell stack 10, while a plurality of cells are often short-circuited at once, a single or a small number of cells may also be short-circuited. Such a short circuit of a single or a small number of cells results in the same state as the degradation of the cell stack 10 and thus can be addressed by performing the control of steps S105 to S108.

### <Supplementary Note>

The electrolysis device, the electrolysis device control method, and the electrolysis device control program according to the embodiment described above are understood as follows, for example.

The electrolysis device (1) of the first aspect of the present disclosure is an electrolysis device including: a plurality of rectifiers (20); and an electrolyzer (100) having a plurality of cell stacks (10) having common positive electrodes, the positive electrode of each of the cell stacks is connected to the positive electrode of each of the plurality of rectifiers installed in parallel, the negative electrode of each of the cell stacks is connected to the negative electrode of each of the rectifiers, and the electrolysis device includes a balance cable (80) connecting a negative electrode of at least one of the cell stacks and a negative electrode of at least another one the cell stacks to each other.

Since the circulation current in the electrolyzer flows through the balance cable, the circulation current flowing through the grounding is reduced. The circulation current that may occur through piping, a building, or the like other than the grounding wires of the electrolyzer can also be reduced.

Although it is considered that current flowing to the ground may cause fluctuations of the potential of the grounding grid and this may cause signal noise, the signal noise due to the circulation current flowing through the grounding can be reduced.

Further, the use of the balance cable can reduce costs without the use of a bus duct that involves an expensive material.

The electrolysis device of the second aspect of the present disclosure has, in the first aspect, a current sensor (90) configured to measure current of the balance cable; and a controller (50) configured to control a value of output current of each of the rectifiers based on a value of current measured by the current sensor.

The use of the balance cable makes it possible to use the current sensor (90) having an opening diameter corresponding to the cable diameter and reduce costs.

Since the values of output current of the rectifiers are set based on the value of current flowing through the balance cable provided on the negative electrode side of the cell stacks, it is possible to reduce costs without requiring any special configuration.

In the electrolytic device of the third aspect of the present disclosure, in the second aspect, the controller may determine a degradation state of each of the cell stacks of the electrolyzer based on at least one of a value of current measured by the current sensor and a value of unbalance current, the value of unbalance current being a sum of differences of respective values of output current of the rectifiers.

When a cell stack degrades, the resistance thereof becomes higher and the current becomes less likely to flow therein than in a state before the degradation. Thus, the current ratio of one cell stack on the degraded side decreases even through the one cell stack has substantially the same current ratio as another cell stack if the degradation state is substantially the same. When the current ratio of one of the cell stacks decreases, current flows toward the degraded side through the balance cable installed on the negative electrode side of the cell stacks. By measuring the value of current of the balance cable, it is possible to determine which of the cell stacks has deteriorated.

In the electrolytic device of the fourth aspect of the present disclosure, in the third aspect, the controller may control a value of output current of each of the rectifiers based on the degradation state of each of the cell stacks of the electrolyzer.

Since the values of output current of respective rectifiers are controlled in accordance with the degradation state of the cell stacks, current of a value in accordance with the degradation flows, and thereby current flowing through the balance cable can be reduced.

In the electrolytic device of the fifth aspect of the present disclosure, in any of the second aspect to the fourth aspect, the controller may deactivate the rectifiers when the value of current measured by the current sensor exceeds a predetermined threshold.

For example, once a cell stack is short-circuited, the current ratio on the short-circuited side significantly increases. The increased current ratio on one side causes current to flow from the short-circuited side through the balance cable installed on the negative electrode side of the cell stacks. By detecting that the value of current of the balance cable exceeds a predetermined threshold, it is possible to detect the short circuit in the cell stack and deactivate the rectifier to protect the electrolysis device.

The electrolysis device control method of the sixth aspect of the present disclosure is a control method performed by a computer of an electrolysis device, the electrolysis device has a plurality of rectifiers and a plurality of cell stacks having common positive electrodes, the positive electrode of each of the cell stacks is connected to the positive electrode each of the plurality of rectifiers installed in parallel, the negative electrode of each of the cell stacks is connected to the negative electrode of each of the rectifiers, the electrolysis device includes a balance cable connecting a negative electrode of at least one of the cell stacks and a negative electrode of at least another one of the cell stacks to each other and a current sensor configured to measure current of the balance cable, and the control method includes: controlling a value of output current of each of the rectifiers based on a value of current measured by the current sensor.

The electrolysis device control program of the seventh aspect of the present disclosure causes a computer to perform the control method according to the sixth aspect.

Although the above embodiment has been described with the two cell stacks 10 and two rectifiers 20, a plurality of, other than two, cell stacks 10 and a plurality of, other than two, rectifiers 20 may be provided. The number of cell stacks 10 may differ from the number of rectifiers 20.

### [Reference Signs List]

- 1: electrolysis device
- 10, 10a, 10b: cell stack
- 20, 20a, 20b: rectifier
- 30: grounding wire
- 50: controller
- 51: acquisition unit
- 52: determination unit
- 53: output unit
- 80: balance cable
- 90: ammeter
- 100: electrolyzer
- 1100: CPU
- 1200: secondary storage device
- 1300: main storage device
- 1500: communication unit
- 1800: bus

## Claims

1. An electrolysis device comprising:
a plurality of rectifiers; and
an electrolyzer having a plurality of cell stacks having common positive electrodes,
wherein a positive electrode of each of the cell stacks is connected to a positive electrode of each of the plurality of rectifiers installed in parallel, and
wherein a negative electrode of each of the cell stacks is connected to a negative electrode of each of the rectifiers,
the electrolysis device further comprising
a balance cable connecting a negative electrode of at least one of the cell stacks and a negative electrode of at least another one of the cell stacks to each other.

2. The electrolysis device according to claim 1 further comprising:
a current sensor configured to measure current of the balance cable; and
a controller configured to control a value of output current of each of the rectifiers based on a value of current measured by the current sensor.

3. The electrolysis device according to claim 2, wherein the controller determines a degradation state of each of the cell stacks of the electrolyzer based on at least one of a value of current measured by the current sensor and a value of unbalance current, the value of unbalance current being a sum of differences of respective values of output current of the rectifiers.

4. The electrolysis device according to claim 3, wherein the controller controls a value of output current of each of the rectifiers based on the degradation state of each of the cell stacks of the electrolyzer.

5. The electrolysis device according to claim 2, wherein the controller deactivates the rectifiers when the value of current measured by the current sensor exceeds a predetermined threshold.

6. An electrolysis device control method performed by a computer of an electrolysis device, the electrolysis device comprising
a plurality of rectifiers, and
a plurality of cell stacks having common positive electrodes,
wherein a positive electrode of each of the cell stacks is connected to a positive electrode of each of the plurality of rectifiers installed in parallel, and
wherein a negative electrode of each of the cell stacks is connected to a negative electrode of each of the rectifiers,
the electrolysis device further comprising
a balance cable connecting a negative electrode of at least one of the cell stacks and a negative electrode of at least another one of the cell stacks to each other, and
a current sensor configured to measure current of the balance cable,
the control method comprising:
controlling a value of output current of each of the rectifiers based on a value of current measured by the current sensor.

7. An electrolysis device control program that causes a computer to perform the electrolysis device control method according to claim 6.
